# EUROPÄISCHE PATENTANMELDUNG

(11) **EP 0 840 056 A1**
(43) Veröffentlichungstag der Anmeldung: **06.05.1998**
(21) Anmeldenummer: 97118388.4
(22) Anmeldetag: 23.10.1997
(51) Int. Cl.: F17C 13/02

(54) **System und Verfahren zum Aufrechterhalten oder Erhöhen des Drucks in einem Kryotank**

(30) Priorität: 05.11.1996 DE 19645492
(71) Anmelder: MESSER GRIESHEIM GMBH, 60547 Frankfurt (DE)
(72) Erfinder: Friedel, Michel, 40699 Erkrath (DE); Sielschott, Werner, Dr., 41812 Erkelenz (DE)

(57) **Zusammenfassung**

Die Erfindung betrifft ein System und ein Verfahren zum Aufrechterhalten oder Erhöhen des Drucks in einem Kryotank, mit einem isolierten Speicherbehälter, der ein tiefkaltes, flüssiges Druckgas enthält. Bei der Entnahme von flüssigem Gas kommt es zu einem Druckabfall in dem Tank. Für viele Anwendungen ist es aber erforderlich, den Druck im Tank konstant zu halten. Zu diesem Zweck sieht die Erfindung vor, ein Heizgas durch eine Rohrleitung zu leiten, welche durch den Kryotank führt.

## Beschreibung

Die Erfindung betrifft ein System und ein Verfahren zum Aufrechterhalten oder Erhöhen des Drucks in einem Kryotank, welches einen isolierten Speicherbehälter aufweist.

Ein Kryotank ist ein isolierter Vorratsbehälter, in dem flüssige, tiefkalte Gase in der Regel unter Überdruck gespeichert werden. Die tiefe Temperatur der verflüssigten Gase kann durch eine Vakuumisolation über längere Zeitspannen aufrechterhalten werden. Solche Kryotanks werden beispielsweise in der Kraftfahrzeugtechnik als Treibstofftanks eingesetzt, und sie können verflüssigten Wasserstoff (LH₂), flüssiges Erdgas (LNG), verflüssigten Stickstoff (LN₂) oder dergleichen enthalten.

Bei der Entnahme von flüssigem Gas aus einem Kryotank kommt es zu einem Druckabfall in dem Tank. Für viele Anwendungen, beispielsweise dem obengenannten Einsatz als Treibstofftank für ein Kraftfahrzeug, ist es aber erforderlich, den Druck im Tank konstant zu halten. Der konstante Innendruck im Kryotank dient unter anderem einer kontinuierlichen Versorgung eines oder mehrerer Verbraucher mit dem Flüssiggas.

Zur Druckerhöhung oder -aufrechterhaltung muß dem Kryotank Wärme zugeführt werden. Hierfür wurden bisher elektrische Heizeinrichtungen im Inneren des Kryotanks oder Druckaufbauverdampfer eingesetzt. Ein Druckaufbauverdampfer entnimmt dem Kryotank eine kleine Menge des flüssigen Gases, das Gas wird außerhalb des Kryotanks verdampft und dem Tank wieder zugeführt. Dabei zirkuliert das "Druckaufbau-Gas" aufgrund der Druckunterschiede zwischen der flüssigen und der gasförmigen Phase ohne zusätzliche Hilfsmittel. Diese Art der Aufrechterhaltung oder Erhöhung des Innendrucks in einem Kryotank mittels Druckaufbauverdampfer eignet sich insbesondere für große, stehende Flüssiggasspeicher. Die Leistung der Druckaufbauverdampfer ist vom Füllstand in dem Speichertank abhängig. Ferner können Probleme aufgrund des Phasenwechsels entstehen.

Die oben genannten elektrischen Heizeinrichtungen sind in der Regel als Widerstandsheizungen realisiert. Diese benötigen nicht nur elektrische Energie, sondern sie erfordern auch aufwendige vakuumdichte sowie tieftemperatur- und druckbeständige Durchführungen. Bei einem Defekt erzeugen sie hohe Reparaturkosten. Die bisher bekannten Lösungen zum Aufrechterhalten oder Erhöhen des Drucks in einem Kryotank bei Entnahme von flüssigem Gas sind somit nicht vollkommen zufriedenstellend.

Aufgabe der Erfindung ist daher, ein System und ein Verfahren zum Aufrechterhalten oder Erhöhen des Drucks in einem Kryotank anzugeben, mit denen ohne Zuführung elektrischer Energie der Druck im Tank auch bei geringem Füllstand konstant gehalten werden kann. Die neue Vorrichtung und das Verfahren sollen insbesondere auch in kleinen, mobilen Kryotanks einsetzbar sein, beispielsweise in Treibstofftanks für den Kraftfahrzeugbereich.

Diese Aufgabe wird erfindungsgemäß durch ein System und ein Verfahren zum Aufrechterhalten oder Erhöhen des Drucks in einem Kryotank gemäß Anspruch 1 bzw. Anspruch 12 gelöst.

Das erfindungsgemäße System weist einen isolierten Speicherbehälter auf, der ein tiefkaltes flüssiges Primärgas oder Nutzgas enthält. Durch den Speicherbehälter führt eine von einem Heizgas durchströmte Rohrleitung. Das Heizgas gibt einen Wärmestrom (Konvektionswärme) an den kälteren Behälterinhalt ab, wodurch sich die Verdampfungsrate des flüssigen Primärgases im Speicherbehälter erhöht und der Druck in diesem Behälter ansteigt.

Als Primärgas oder Nutzgas wird z.B. verflüssigter Wasserstoff (LH₂), verflüssigter Stickstoff (LN₂) oder verflüssigtes Erdgas (LNG) verwendet. Bei einer Ausführungsform der Erfindung ist das Heizgas das gleiche Gas wie das Primärgas, allerdings in gasförmigem Zustand. Diese Ausführungsform wird auch als "Eigengaskonvektor" bezeichnet. Dabei ist besonders vorteilhaft, wenn das Eigen-Heizgas bei überkritischem Druck zugeführt wird, weil es dann bei Abkühlung an der Siedelinie keinen definierten Phasenübergang gibt und sich trotzdem eine große Dichtesteigerung einstellt.

Bei einer anderen Ausführungsform der Erfindung wird als Heizgas ein Gas mit einem niedrigeren Siedepunkt (oder einem niedrigeren kritischen Punkt) als das Primärgas, ebenfalls in gasförmigem Zustand, verwendet. Hierzu eignet sich z.B. Helium. Diese Ausführung wird als "Fremdgaskonvektor" bezeichnet.

Für beide Ausführungsformen gilt, daß das Heizgas selbständig zirkuliert, weil sich seine Dichte durch die Abkühlung beim Durchströmen des Speicherbehälters erhöht. Über eine externe Heizeinrichtung oder einen Wärmetauscher wird das Heizgas nach dem Austritt aus dem Speicherbehälters wieder etwa auf Umgebungstemperatur gebracht. Es zirkuliert somit in dem Kreislauf aus Rohrleitung und Wärmetauscher bzw. Heizeinrichtung.

Ferner kann eine Vorrichtung zum Erhöhen des Drucks in der Rohrleitung vorgesehen sein, um die Zirkulationsgeschwindigkeit des Heizgases und somit die Wärmeübertragung in den Speicherbehälter zu erhöhen. Diese Vorrichtung umfaßt z.B. ein Druckgebläse.

Das erfindungsgemäße System kann als ein sogenannter "Druckaufbau-Konvektor" konfiguriert werden, indem der größere Teil der durch den Speicherbehälter führenden Rohrleitung im oberen Bereich des Behälters angeordnet wird, so daß Wärme hauptsächlich in die Gasschicht geleitet wird, während die Flüssigkeit unterkühlt bleibt. Gemäß einer anderen Ausführungsform kann ein sogenannter "Verdampfungskonvektor" aufgebaut werden. Hierzu wird der größere Teil der Rohrleitung durch den unteren Bereich des Speicherbehälters geführt, wobei die stärkere Beheizung der Flüssigkeit eine Verringerung der Temperaturschichtung im Speicherbehälter ergibt. Der Kryotank übernimmt dann auch die Funktion eines Verdampfers.

Typische Größen für den Kryotank und das Rohrleitungssystem nach der Erfindung liegen etwa in den folgenden Bereichen: Der Tank kann eine Größe von etwa 100 bis 140 l haben, die Rohrleitung hat eine effektive Länge von etwa 1 bis 2 m sowie einen Durchmesser von etwa 10 bis 15 mm, insbesondere 12 mm. Ferner kann die Rohrleitung im Inneren des Speicherbehälters gewendelt oder schlangenförmig angelegt sein.

Die erfindungsgemäße Beheizung eines Kryotanks, oder Flüssiggastanks, mittels eines Heizgases, das ein Fremdgas oder das Eigengas sein kann, hat den Vorteil, daß sie vollständig unabhängig vom Füllstand des Behälters ist. Ferner wird keine elektrische Heizeinrichtung benötigt. Da das Fremdgas gegenüber dem Primärgas einen tieferen Siedepunkt hat, wird ein Phasenübergang des Heizgases vermieden. Der gleiche Effekt wird erzielt, wenn das Eigengas unter überkritischem Druck eingeleitet wird. Das Heizgas strömt selbständig, während sich seine Dichte durch die Abkühlung erhöht. Über eine äußere Beheizung oder einen Wärmetauscher wird ein geschlossener Heizgas-Kreislauf gebildet. Die Heizgasströmung kann zusätzlich mittels eines Druckgebläses erhöht werden, wobei sich herausgestellt hat, daß ein höherer Heizgasdruck eine stärkere Konvektion und damit eine höhere Heizleistung ermöglicht. Die Leistungserhöhung ist nahezu proportional zur Druckerhöhung.

Die Erfindung ist im folgenden anhand bevorzugter Ausführungsformen mit Bezug auf die Zeichnung näher erläutert. In den Figuren zeigen:
- Fig. 1: den grundsätzlichen Aufbau eines Systems zum Aufrechterhalten oder Erhöhen des Drucks in einem Kryotank gemäß der Erfindung,
- Fig. 2a und 2b: einen Versuchsaufbau zur Untersuchung des erfindungsgemäßen Systems von Fig. 1.

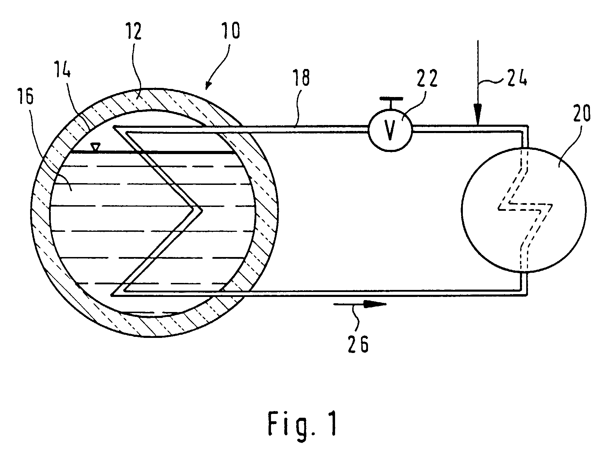

Fig. 1 zeigt einen Schnitt durch einen Tank 10 für tiefkalte verflüssigte Druckgase, oder Kryotank, mit einem Vakuum-Isolationsmantel 12, der einen Speicherbehälter 14 umgibt. In dem Speicherbehälter 14 ist tiefkaltes flüssiges Gas 16 gespeichert, z.B. verflüssigter Wasserstoff (LH₂), verflüssigter Stickstoff (LN₂) oder flüssiges Erdgas (LNG). Eine Rohrleitung 18 führt durch den Speicherbehälter 14 und bildet über eine Heizeinrichtung 20 und ein Absperr- oder ein Regelventil 22 einen geschlossenen Kreislauf. Durch die Rohrleitung 18 strömt ein Heizgas, wobei die Heizgaszuführung schematisch durch einen Pfeil 24 dargestellt ist.
Wenn Flüssiggas 16 aus dem Speicherbehälter 14 entnommen wird, fällt der Druck im Inneren des Speicherbehälters ab. Um diesen Druckabfall auszugleichen, muß dem Speicherbehälter von außen Wärme zugeführt werden. Durch die Rohrleitung 18 wird, wie weiter unten noch näher erläutert ist, ein Fremdgas oder ein Eigengas als Heizgas durch den Speicherbehälter 14 geleitet, wodurch ein Wärmestrom an den kälteren Behälterinhalt abgegeben wird. Dieser Wärmestrom bewirkt eine Druckerhöhung im Speicherbehälter 14. Das abgekühlte, verdichtete Heizgas strömt außerhalb des Kryotanks 10 in Richtung des Pfeiles 26 durch eine Heizeinrichtung 20 oder einen Wärmetauscher, um es wieder auf etwa Umgebungstemperatur zu bringen. Die Heizgaszirkulation kann abhängig vom Innendruck des Speicherbehälters 14 durch ein Absperr- oder Regelventil 22 eingeleitet und unterbrochen werden, um den Druck im Speicherbehälter 14 innerhalb vorgegebener Betriebsgrenzen zu halten.

Wenn als Heizgas ein Fremdgas, d.h. ein anderes als das im Kryotank 10 enthaltene Nutz- oder Primärgas 16, verwendet wird, wird hierfür ein Gas mit einem niedrigeren Siedepunkt gewählt. Hier eignet sich z.B. Helium. Da sich die Dichte des Heizgases durch die Abkühlung bei Durchströmen des Speicherbehälters 14 erhöht, zirkuliert es weitgehend selbständig. Mit dem gegenüber dem Primärgas 16 tiefersiedenden Helium wird ein Phasenübergang vermieden. Die Heliumströmung kann durch ein Druckgebläse (nicht gezeigt) unterstützt werden.

Bei einer modifizierten Ausführungsform wird das Heizgas unter einem erhöhten Druck in die Rohrleitung 18 eingebracht. Dadurch hat das Heizgas eine höhere Dichte, es entsteht eine stärkere Wärmekonvektion an der Oberfläche der Rohrleitung 18, und somit ergibt sich eine höhere Heizleistung. Ein weiterer Effekt der größeren Dichte ist, daß sich auch die Strömungsgeschwindigkeit des Heizgases erhöht und keine Unterstützung der Heizgasströmung, beispielsweise durch das Druckgebläse, mehr notwendig ist.

Bei einer anderen Ausführungsform der Erfindung wird durch die Rohrleitung 18 das gleiche Gas geleitet, das auch als Primärgas 16 im Speicherbehälter 14 enthalten ist. Dabei steht das "Eigen"-Heizgas vorzugsweise unter überkritischem Druck. Es wird beispielsweise bei Umgebungstemperatur eingeleitet. Das durch die Rohrleitung 18 strömende Eigen-Heizgas wird beim Durchgang durch den Speicherbehälter 14 abgekühlt und außerhalb des Kryotanks 10 durch einen Wärmetauscher wieder erwärmt. Da das Heizgas bei überkritischem Druck eingesetzt wird, gibt es bei der Abkühlung keinen definierten Phasenübergang. Trotzdem ergibt sich eine große Zunahme der Dichte. Aufgrund des Dichteunterschieds strömt das Heizgas in der Konvektor-Rohrleitung 18 selbsttätig. Der große Dichteunterschied zwischen dem Eintritt (oben) und dem Austritt des Heizgases aus dem Kryotank 10 führt im Vergleich zum Fremd-Heizgas zu einer noch zuverlässigeren kontinuierlichen Strömung des Heizgases durch die Rohrleitung 18.

Man beachte, daß das Vorsehen eines überkritischen Druckes vorteilhaft, jedoch nicht zwingend notwendig ist. Andererseits kann selbstverständlich auch das Fremdgas unter überkritischem Druck verwendet werden.

Zur Erläuterung der Erfindung sind im folgenden einige Versuchsergebnisse erörtert, die mit dem erfindungsgemäßen System erzielt wurden.

Bei typischen Anwendungen, z.B. als Treibstofftank in der Kraftfahrzeugtechnik, hat der Kryotank 10 die Form eines liegenden Zylinders mit einer Länge von beispielsweise einem Meter und einem Durchmesser von ungefähr einem halben Meter. Der Speicherbehälter 14 hat z.B. ein Fassungsvolumen von 100 bis 140 Litern. Die Rohrleitung 18 kann eine effektive Länge (innerhalb des Speicherbehälters) von ein bis zwei Metern und einen Durchmesser von beispielsweise 12 mm haben. Diese Zahlenwerte sollen lediglich als Beispiel verstanden werden und sind in keiner Hinsicht beschränkend für die Erfindung.

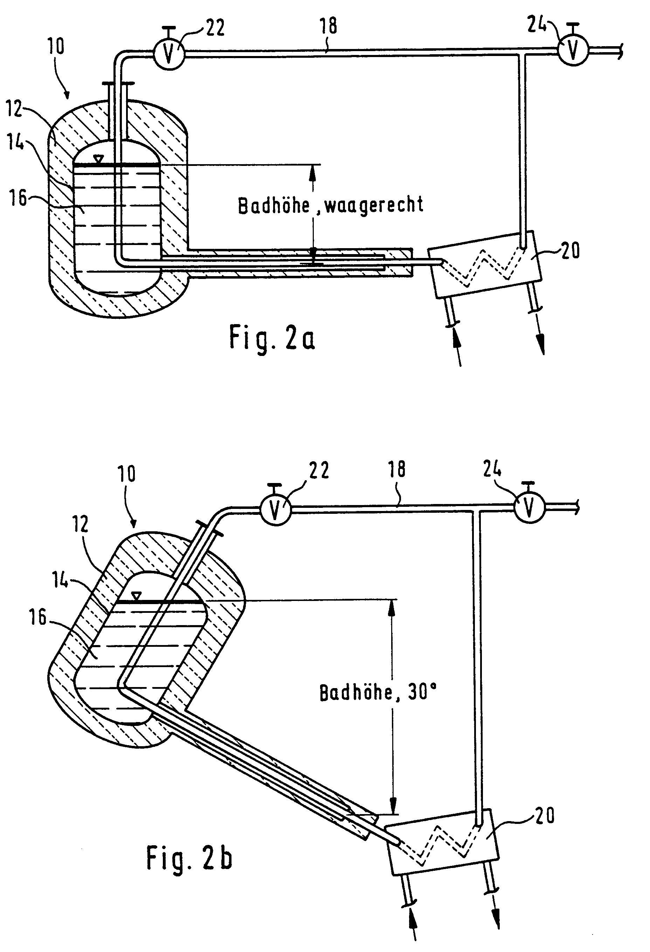

Zur Erprobung des erfindungsgemäßen Systems mit dem Fremd-Heizgas wurden Versuche mit Helium als Heizgas und einem LN₂-Bad als Nutzgas durchgeführt, siehe die Figuren 2a und 2b. Dazu wurde in einen an sich bekannten LN₂-Behälter 10 ein Kupferrohr 18 so eingezogen, daß es oben ein- und unten austritt und über einen Wärmetauscher 20 und ein Ventil 22 einen geschlossenen Kreislauf bildet. Das Rohr wurde mit Helium bei unterschiedlichem Druck beschickt, und die Badhöhe (Eintauchhöhe) des Rohres 18 in das LN₂-Gas 16 wurde durch Neigen des Behälters 10 variiert.

Nachdem sich eine konstante Verdampfungsrate von ca. 240 Litern (gasförmig) pro Stunde eingestellt hatte (bei 1 bar und 15°C), wurde das Ventil im Heliumkreislauf geöffnet. Sofort stieg die Verdampfungsrate an, zunächst schnell und zum Maximalwert hin langsamer (degressiv). Umgekehrt fiel die Verdampfungsrate, wenn das Ventil geschlossen wurde, genauso degressiv wieder ab.

Je nach Badhöhe bzw. Neigung des Kryotanks 10 stieg bei einem Heliumdruck von 20 bar die Verdampfungsrate auf das 10- bis 20-fache des Anfangswertes, wobei Heizleistungen von 130 bis 260 Watt erzielt wurden. Die Leistung dieses selbständig ablaufenden, nur durch das Ventil 22 geregelten Verdampfungs- oder Druckerhöhungssystems konnte ferner durch Erhöhen und Absenken des Heliumdruckes erheblich beeinflußt werden. Der Zusammenhang zwischen der Heizleistung und dem Heizgasdruck ist fast proportional. Gegenüber den aus dem Stand der Technik bekannten Druckaufbauverfahren läßt sich bei dem erfindungsgemäßen System die geringere Verdampfung des Primärgases 16 bei sinkendem Füllstand durch eine Erhöhung des Heizgasdruckes kompensieren.

Die Ergebnisse des oben erläuterten Versuchs sind in der folgenden Tabelle zusammengefaßt:

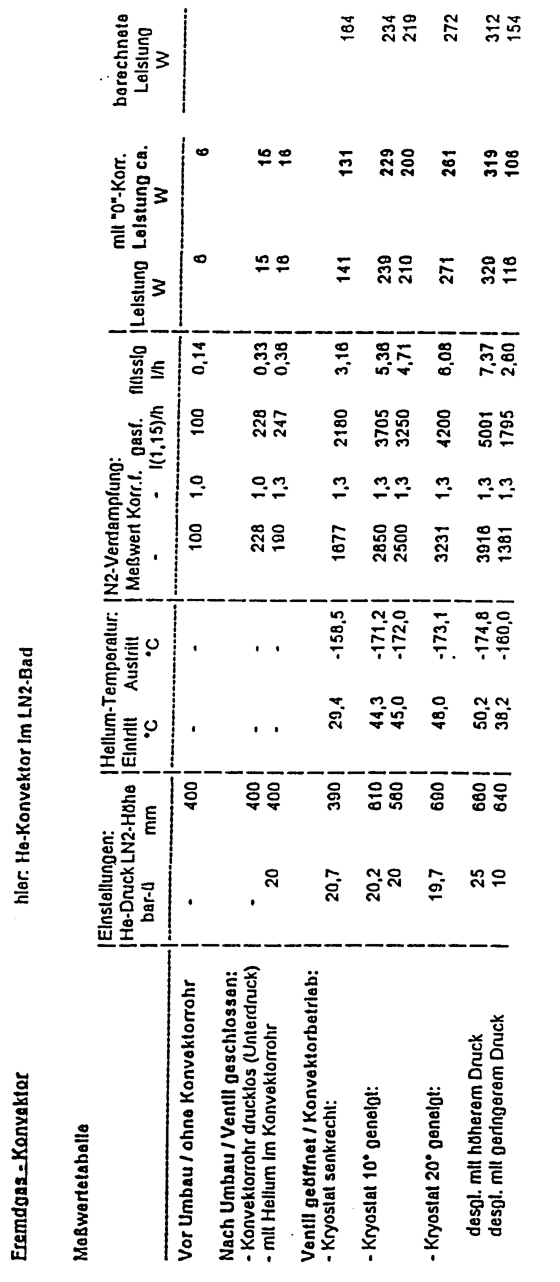

Die Anmelderin hat auch das erfindungsgemäße System unter Verwendung eines Heizgases, das gleich dem Primärgas 16 ist, getestet. Bei dieser sogenannten "Eigengaskonvektor"-Ausführungsform wurde das Helium in der Rohrleitung 18 durch gasförmigen Stickstoff ersetzt. Die Heizleistung stieg daraufhin um etwa das 10-fache gegenüber der Verwendung von Helium als Heizgas an, sie konnte aber bei der bestehenden Konstruktion durch Schließen des Ventils 22 nicht mehr ganz auf den Anfangswert zurückgebracht werden, weil ein Teil des Heizgases (in diesem Fall Stickstoff N₂) kondensierte. Dieser Effekt kann dadurch vermieden werden, daß das Heizgas unter überkritischem Druck in die Rohrleitung 18 geleitet wird. Durch den überkritischen Druck wird ein definierter Phasenübergang, und eine daraus resultierende Pulsation, vermieden. Andererseits ist der Dichteunterschied zwischen dem eintretenden warmen und dem austretenden kalten Gas besonders hoch.

Schließlich kann das in den Fig. 1 und 2 dargestellte System noch so modifiziert werden, daß es als "Druckaufbau-Konvektor" oder als "Verdampfungs-Konvektor" arbeitet.

Bei dem sogenannten Druckaufbau-Konvektor wird eine verhältnismäßig dünne Konvektorschlange, d.h. die Rohrleitung 18, so im Speicherbehälter 14 angeordnet, daß der größte Teil ihrer Heizfläche im oberen Teil und somit im Gasraum des Kryotanks 10 untergebracht ist. Dabei wird die Wärme hauptsächlich in die Gasschicht geleitet, während die Flüssigkeit unterkühlt bleibt. Diese Lösung ist besonders günstig für ortsfeste Tanks, oder in solchen Fällen, wo kaltes Flüssiggas benötigt wird.

Bei dem sogenannten Verdampfungs-Konvektor wird eine stärkere Beheizung der Flüssigkeit dadurch erreicht, daß eine größere Heizfläche, also der größere Teil der Rohrleitung 18, durch den unteren Bereich des Speicherbehälters 14 geführt wird, um die Temperaturschichtung im verflüssigten Gas zu verringern. Der Kryotank 10 übernimmt dann die Funktion eines Verdampfers mit. Bei Verwendung des erfindungsgemäßen Verdampfungs-Konvektors als Treibstofftank, z.B. gefüllt mit flüssigem Wasserstoff, LH₂, oder flüssigem Erdgas, LNG, kann somit direkt kaltes Gas anstelle von Flüssiggas entnommen werden. Dies hat den großen Vorteil, daß in der Entnahmeleitung keine Zweiphasenströmung und damit in einem nachgeschalteten Wärmetauscher keine Spontanverdampfung oder Pulsation auftreten kann.

Die in der vorstehenden Beschreibung, den Figuren und den Ansprüchen offenbarten Merkmale können sowohl einzeln als auch in beliebiger Kombination für die Verwirklichung der Erfindung von Bedeutung sein.

## Patentansprüche

1. System zum Aufrechterhalten oder Erhöhen des Drucks in einem Kryotank (10), mit einem isolierten Speicherbehälter (14), der ein kaltes Primärgas (16) enthält, einer Rohrleitung (18), welche durch den Speicherbehälter führt, und einer Einrichtung (20, 22, 24) zum Leiten eines Heizgases durch die Rohrleitung.

2. System nach Anspruch 1,
dadurch gekennzeichnet,
daß das Primärgas ein tiefkaltes, verflüssigtes Gas, insbesondere verflüssigter Wasserstoff (LH₂), verflüssigter Stickstoff (LN₂) oder flüssiges Erdgas (LNG) ist.

3. System nach Anspruch 1 oder 2,
dadurch gekennzeichnet,
daß das Heizgas das gleiche Gas wie das Primärgas, in gasförmigem Zustand, ist.

4. System nach Anspruch 1 oder 2,
dadurch gekennzeichnet,
daß das Heizgas ein Gas mit einem niedrigeren Siedepunkt als das Primärgas, insbesondere Helium (He), in gasförmigem Zustand ist.

5. System nach einem der vorangehenden Ansprüche,
dadurch gekennzeichnet,
daß die Rohrleitung (18) über einen Wärmetauscher oder eine Heizeinrichtung (20) einen geschlossenen Kreislauf bildet.

6. System nach einem der vorangehenden Ansprüche,
gekennzeichnet durch
eine Vorrichtung zum Erhöhen des Drucks in der Rohrleitung.

7. System nach Anspruch 6,
dadurch gekennzeichnet,
daß die Vorrichtung zum Erhöhen des Drucks ein Druckgebläse aufweist.

8. System nach einem der vorangehenden Ansprüche,
dadurch gekennzeichnet,
daß der größere Teil der durch den Speicherbehälter (14) führenden Rohrleitung (18) im oberen Bereich des Speicherbehälters angeordnet ist, so daß Konvektionswärme hauptsächlich in eine Gasschicht in dem Speicherbehälter (14) geleitet wird.

9. System nach einem der vorangehenden Ansprüche 1 bis 7,
dadurch gekennzeichnet,
daß der größere Teil der durch den Speicherbehälter (14) führenden Rohrleitung (18) im unteren Bereich des Speicherbehälters angeordnet ist, so daß Konvektionswärme hauptsächlich in eine Flüssigkeitsschicht in dem Speicherbehälter (14) geleitet wird.

10. System nach einem der vorangehenden Ansprüche,
dadurch gekennzeichnet,
daß der Speicherbehälter (14) ein Fassungsvolumen von etwa 100 - 140 l hat, und die Rohrleitung (18) eine effektive Länge von etwa 1 bis 2 m und einen Durchmesser von etwa 10 bis 15 mm hat.

11. System nach einem der vorangehenden Ansprüche,
dadurch gekennzeichnet,
daß die Rohrleitung (18) im Inneren des Speicherbehälters (14) gewendelt ist.

12. Verfahren zum Aufrechterhalten oder Erhöhen des Drucks in einem Kryotank (10), der ein kaltes Primärgas (16) enthält, bei dem ein Heizgas durch eine Rohrleitung (18) geleitet wird, welche durch den Kryotank (10) führt.

13. Verfahren nach Anspruch 12,
dadurch gekennzeichnet,
daß als Primärgas ein tiefkaltes, verflüssigtes Gas, insbesondere verflüssigter Wasserstoff (LH₂), verflüssigter Stickstoff (LN₂) oder flüssiges Erdgas (LNG) verwendet wird.

14. Verfahren nach Anspruch 12 oder 13,
dadurch gekennzeichnet,
daß als Heizgas das gleiche Gas wie das Primärgas, in gasförmiger Phase, verwendet wird

15. Verfahren nach Anspruch 12 oder 13,
dadurch gekennzeichnet,
daß als Heizgas ein Gas mit einem geringeren Siedepunkt als das Primärgas, insbesondere Helium (He), verwendet wird.

16. Verfahren nach einem der vorangehenden Ansprüche 13 bis 15,
dadurch gekennzeichnet,
daß das Heizgas unter überkritischem Druck durch die Rohrleitung (18) strömt.

17. Verfahren nach einem der vorangehenden Ansprüche 13 bis 16,
dadurch gekennzeichnet,
daß das Heizgas in einem geschlossenen Kreislauf geführt und außerhalb des Kryotanks erwärmt wird.

18. Verfahren nach einem der vorangehenden Ansprüche 13 bis 17,
dadurch gekennzeichnet,
daß der Druck des Heizgases verändert wird, um die Heizwirkung des Heizgases zu steuern.

19. Verfahren nach einem der vorangehenden Ansprüche 13 bis 18,
dadurch gekennzeichnet,
daß das Heizgas einem ausgewählten Bereich des Kryotanks (10) in größeren Umfang zugeführt wird als anderen Bereichen des Kryotanks, um gezielt einen bestimmten Teil des Innenraums des Kryotanks zu erwärmen.
